Europäisches Patentamt

European Patent Office

Office européen des brevets

(11) Numéro de publication: **0 211 770 B1**

(12) **FASCICULE DE BREVET EUROPEEN**

(45) Date de publication de fascicule du brevet: **22.06.94** (51) Int. Cl.⁵: **G06F 15/68**

(21) Numéro de dépôt: **86401775.1**

(22) Date de dépôt: **07.08.86**

(54) **Dispositif de transformation séquentielle d'image.**

(30) Priorité: **07.08.85 FR 8512120**

(43) Date de publication de la demande:
**25.02.87 Bulletin 87/09**

(45) Mention de la délivrance du brevet:
**22.06.94 Bulletin 94/25**

(84) Etats contractants désignés:
**DE GB NL**

(56) Documents cités:

**CONFERENCE PROCEEDINGS OF THE 7TH ANNUAL SYMPOSIUM ON COMPUTER ARCHITECTURE, 6-8 mai 1980, pages 271-277, IEEE, New York, US; R.M. LOUGHEED et al.: "Thecytocomputer: a practical pipelined image processor"**

(73) Titulaire: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06(FR)**

(72) Inventeur: **Meyer, Fernand**
**61, Avenue de Fontainebleau**
**F-77250 Veneux-les-Sablons(FR)**
Inventeur: **Klein, Jean-Claude**
**35, rue Saint Honoré**
**F-77305 Fontainebleau Cedex(FR)**

(74) Mandataire: **Fort, Jacques et al**
**CABINET PLASSERAUD**
**84, rue d'Amsterdam**
**F-75009 Paris (FR)**

Rank Xerox (UK) Business Services
(3.10/3.09/3.3.3)

**Description**

L'invention concerne le domaine du traitement d'images définies par des points élémentaires ou pixels présentant chacun une caractéristique, telle qu'une brillance, définie par la valeur numérique d'une fonction. Elle concerne plus particulièrement un dispositif de transformation séquentielle d'images, permettant un mode d'exploration de tout ou partie de l'image suivant lequel on modifie la valeur de chaque point en fonction d'un jeu de points associés prenant leurs valeurs dans une ou plusieurs images et se situant à l'intérieur d'une fenêtre linéaire ou surfacique glissante liée au point à transformer, identique pour tous les pixels et constituant élément structurant. Elle est susceptible d'application dans tous les domaines de l'analyse d'image et notamment dans ceux de la reconnaissance des formes et de la visualisation de produits industriels, en robotique en particulier.

Les transformations sequentielles d'image sont connues depuis longtemps. On pourra par exemple en trouver une description dans l'article de A. Rosenfeld et Coll. "Sequential operations in digital picture processing" J. ACM, Vol. 13, No. 4, 1966, pp. 471-494.

Pour faciliter la compréhension de l'invention, on définira tout d'abord les transformations séquentielles et la terminologie qui sera adoptée et qui est celle couramment utilisée dans le domaine du traitement numérique d'image.

Une image numérisée est constituée par une matrice de pixels à m lignes et n colonnes. Chaque pixel a une valeur $a_{ij}$ appartenant à une famille finie de valeurs $v_1,..., v_k$. Dans la pratique, on adopte en général k $= 2^s$, s étant un nombre entier, (ce qui signifie que l'on représente chaque valeur par un nombre de s bits et qu'on dispose de $2^s$ niveaux de quantification).

On définira les pixels voisins de chaque pixel donné par un graphe de voisinage, dont des exemples seront donnés plus loin, et qui sera naturellement différent suivant que la trame utilisée est carrée ou hexagonale et que l'on étend plus ou moins loin la notion de voisinage.

Une opération sur une image numérisée sera constituée par une fonction transformant la matrice de l'image en une autre matrice. La fonction la plus générale de ce type a donc m x n arguments si chaque pixel constitue un argument et si la matrice est à m lignes et n colonnes. On réduit le nombre d'arguments en effectuant des opérations dites "locales" ou "de voisinage". Une transformation de voisinage définit la valeur du pixel transformé en fonction uniquement de la valeur du pixel d'origine et des valeurs de pixels associés, pris dans un arrangement constant autour du pixel considéré. Cet arrangement constant constitue une fenêtre glissante liée au point à transformer. Les points peuvent prendre leur valeur dans une ou plusieurs images. Cette valeur peut être la valeur des points avant que la transformation ait été mise en oeuvre : il s'agit alors d'une transformation parallèle. L'élément constituant n'est pas constitué forcément des voisins immédiats du point à transformer. La notion de voisins immédiats étant elle-même définie grâce à un graphe de voisinage, dont les différents types vont maintenant être examinés.

A titre d'exemple, on donnera maintenant les principaux graphes de voisinage que l'on rencontre en pratique.

Trame carrée :

Deux graphes de voisinage sont couramment utilisés. Ils correspondent respectivement à une connexité quatre et une connexité huit.

Dans le cas de la connexité quatre, chaque pixel x a quatre voisins $x_1$, $x_2$, $x_3$, $x_4$, répartis comme suit :

$$\begin{array}{ccc} & x_2 & \\ x_3 & x & x_1 \\ & x_4 & \end{array}$$

Les distances d entre le pixel considéré x et chacun des pixels voisins sont toutes égales.

Dans le cas d'une connexité huit, chaque pixel x a huit voisins, $x_1,..., x_8$ et la répartition est la suivante :

$$\begin{array}{ccc} x_4 & x_3 & x_2 \\ x_5 & x & x_1 \\ x_6 & x_7 & x_8 \end{array}$$

Dans ce cas, la distance entre :
- le pixel considéré x d'une part, chacun des pixels $x_1$, $x_2$, $x_5$, $x_7$, d'autre part, vaut d1 = 5,
- le pixel x d'une part, chacun des pixels $x_2$, $x_4$, $x_6$, $x_8$ d'autre part, vaut d2 = 7.

Ces distances sont dans le rapport 7/5 = 1,4, peu différent de $\sqrt{2}$.

Trame hexagonale :

On peut dans ce cas adopter une connexité six ou douze.

Dans le premier cas, chaque pixel a six voisins $x_1,..., x_6$, tous à la même distance du pixel considéré x :

$$\begin{array}{ccc} & x_3 & x_2 \\ x_4 & x & x_1 \\ & x_5 & x_6 \end{array}$$

Dans le cas de la connexité douze, chaque pixel a douze voisins $x_1,..., x_{12}$ présentant la répartition :

$$\begin{array}{ccccc} & & x_4 & & \\ x_6 & x_5 & & x_3 & x_2 \\ & x_7 & x & & x_1 \\ x_8 & x_9 & & x_{11} & x_{12} \\ & & x_{10} & & \end{array}$$

Dans ce cas, les distances entre x et tous les points d'indice impair sont égales et valent d1 = 4, les distances entre x et tous les points d'indice pair valant d2 = 7. De cette manière, le rapport entre ces deux distances est de 1,75, proche de $\sqrt{3}$.

Lors de la description de l'invention, on se contentera, pour des raisons de simplicité, de donner des exemples correspondant uniquement à des connexités particulières, particulièrement représentatives. Mais on verra que l'invention est dans tous les cas transposable aux diverses trames et diverses connexités possibles.

Les transformations de voisinage sont classiquement effectuées par traitement parallèle. La transformation est effectuée sur tous les points de l'image, indépendamment les uns des autres. Les arguments ($a_{j-1, j-1},... a_{i+1, j+1},...$) pris en compte dans la transformation du pixel $a_{ij}$ sont toujours les valeurs des pixels de voisinage dans l'image d'origine. On stocke chacune des nouvelles valeurs de pixel, c'est-à-dire la valeur $a^*_{ij}$ pour le pixel $a_{ij}$, mais aucun pixel transformé n'est utilisé avant que la transformation n'ait été effectuée pour tour les m x n pixels.

Ce mode de transformation présente un avantage qui, jusqu'à ce jour, a conduit l'homme du métier à l'adopter de façon quasi exclusive : les algorithmes sous-jacents sont conceptuellement simples et il est aisé de réaliser un dispositif pour les mettre en valeur. De plus, le résultat de la transformation est indépendant du mode d'exploration de l'image, ce qui permet d'utiliser le mode usuel d'exploration des images ainsi que des générateurs d'adresse classiques. Mais il n'avait pas été pleinement apprécié que chaque transformation prise isolément est peu efficace et il faut généralement un grand nombre de passes successives avant d'obtenir le résultat final. Pour atteindre des vitesses élevées, il faut multiplier les processeurs dans un même appareil, ce qui le rend complexe et très coûteux.

Les transformations séquentielles, décrites dans l'article de Rosenfeld et Coll. déjà mentionné, présentent par contre la caractéristique de fournir un résultat qui dépend du mode et du sens de balayage de l'image d'origine. Si par exemple l'image numérique d'origine est explorée selon un balayage video classique qu'on appellera "balayage video direct", c'est-à-dire ligne par ligne, de gauche à droite et de haut en bas, une transformation séquentielle donne, à partir du pixel d'origine $a_{ij}$, le pixel transformé $a^*_{ij}$ :

$$a^*_{i,j} = f \ [ \ (a^*_k)_{k \ \epsilon \ P(i,j)}, \ a_{ij}, \ (a_k)_{k \ \epsilon \ F(i,j)} \ ] \qquad (1)$$

En clair, chaque fois qu'un pixel est transformé, c'est sa nouvelle valeur, et non plus sa valeur dans l'image de départ, qui est utilisée comme argument pour transformer les points suivants qui le contiennent dans leur élément structurant.

La formule (1) correspond au balayage dans le sens video direct. Dans cette formule, $(a^*_k)_{,k \ \epsilon \ P(i,j)}$ est la famille des points du voisinage de $a_{ij}$ qui ont déjà été rencontrés, lors du balayage de l'image avant le pixel $a_{ij}$ et ayant de ce fait déjà acquis leur nouvelle valeur.

Par contre $(a_k)_{k \epsilon F(i,j)}$ désigne l'ensemble $F_{ij}$, famille des points du voisinage du pixel considéré $a_{ij}$ non encore rencontrés lors du balayage de l'image au moment du traitement du pixel $a_{ij}$.

L'algorithme correspondant à la transformation séquentielle dans le sens du balayage video inverse, c'est-à-dire

$$a_{mn}, \ a_{m,n-1},..., \ a_{m1}, a_{m-1,n},..., \ a_{m-1,1},..., \ a_{2n},..., \ a_{12}, \ a_{11}$$

découle directement de la formule (1).

L'invention utilise notamment la constatation qu'il est possible, en effectuant une série de transformations séquentielles, et en inversant le sens du balayage à chaque nouvelle transformation, d'arriver à un résultat équivalent à celui d'une séquence bien plus longue de transformations parallèles. Mieux : dans la plupart des cas, le résultat est obtenu après un nombre fixe de balayages indépendant du contenu de l'image : le nombre fixe est le plus souvent égal à 2 (un aller-retour) ou 3.

L'invention propose en conséquence un dispositif de transformation d'image définie par des pixels présentant chacun une caractéristique, telle qu'une brillance définie par une valeur numérique, suivant la revendication 1.

L'invention sera mieux comprise à la lecture de la description qui suit de modes particuliers d'exécution, donnés à titre d'exemples non limitatifs. La description se réfère aux dessins qui l'accompagnent, dans lesquels :

- la Figure 1 est un synoptique montrant l'architecture générale d'un analyseur d'image permettant de mettre en oeuvre l'invention et comportant un processeur à ré-écriture,
- la Figure 2 est un dispositif de stockage local et de ré-écriture en trame carrée, pouvant être incorporé dans le dispositif de la Figure 1 pour réaliser la fonction ERODE et la reconstruction de grains,
- la Figure 3 est un schéma destiné à faire apparaître la différence entre distance euclidienne et distance géodésique,
- les Figures 4 et 5 montrent, à titre d'exemples et pour le même ensemble X, la fonction ERODE euclidienne et la fonction ERODE géodésique conditionnellement à un ensemble particulier Y,
- la Figure 6 est un synoptique d'un processeur permettant d'obtenir la fonction ERODE géodésique,
- la Figure 7 est un synoptique d'un processeur permettant la reconstruction de grains avec ré-écriture,
- la Figure 8 est un schéma d'un dispositif de stockage local pour des transformations parallèles en maille hexagonale,
- la Figure 8A est un synoptique montrant la modification à apporter au dispositif de la Figure 8 pour effectuer un stockage local et une triple réécriture, en vue de transformations séquentielles hexagonales,

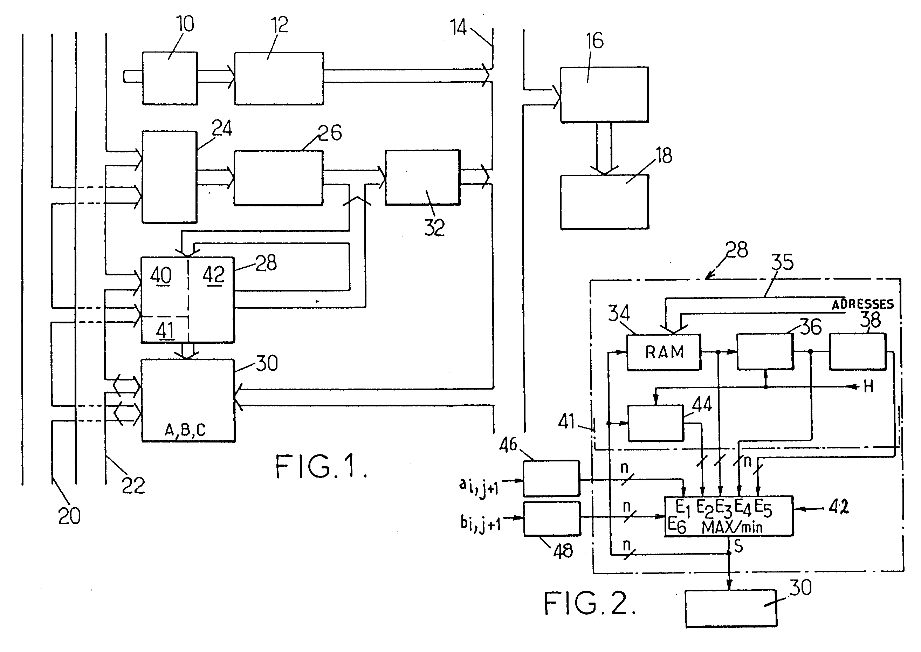

L'invention peut notamment être mise en oeuvre dans un analyseur d'image ayant une constitution générale classique, telle que celle montrée en Figure 1, mais ayant un processeur morphologique à réécriture.

L'analyseur de la Figure 1 comporte un organe 10 d'acquisition d'image (caméra ou enregistrement), dont les signaux de sortie sont numérisés dans un circuit 12, chaque pixel étant représenté par un nombre constitué de plusieurs éléments binaires ou "bits" (image numérique). Les signaux sont appliqués sur un bus d'écriture 14 relié à une mémoire de visualisation 16 ayant un contenu correspondant au nombre de pixels d'une image à fournir sur un organe de visualisation 18 tel qu'un tube cathodique.

L'analyseur comporte deux bus de lecture ayant la même constitution, pouvant être reliés à d'autres parties, telles que des enregistreurs sur bande, etc. Les données circulant sur ces bus d'entrée sont appliquées à une unité arithmétique et logique 24 pouvant réaliser des opérations d'addition, de soustraction, de recherche de minimum et de recherche de maximum entre pixels. La sortie de l'unité 24 est reliée à un processeur morphologique de voisinage 26 permettant de réaliser des transformations de voisinage parallèles.

Les bus de lecture 20 et 22 sont également reliés à un processeur morphologique 28. La sortie des processeurs 26 et 28 est appliquée, par un bus commun, à un circuit 32 dont le rôle est de fournir un critère d'arrêt du processeur à ré-écriture. Ce circuit effectue une mesure d'intégrale. Mais un critère d'arrêt plus avantageux peut être implanté dans le processeur lui-même, pour toutes les transformations qui ne conduisent pas au résultat en un nombre fixe de transformations. En effet, il suffit d'un comparateur qui compare la valeur initiale et la valeur transformée de chaque pixel à son tour. Tant qu'un couple de transformation en sens direct puis en sens inverse modifie un seul pixel, un nouveau couple de transformations doit être mis en oeuvre. Le comparateur a comme entrées les valeurs des pixels $a_{ij}$ et $a_{ij}^*$ (ancienne valeur et valeur transformée). La sortie du comparateur constitue l'entrée d'une porte OU. La sortie de la porte OU est reliée à l'entrée d'une bascule capable de stocker un bit. Cette bascule, mise à zéro au début d'un couple de transformation, bascule à 1 dès que deux pixels $a_{ij}$ et $a_{ij}^*$ ont des valeurs différentes. La sortie de la bascule est réinjectée dans la porte OU de manière à ce que la bascule reste bloquée à 1 jusqu'à la fin.

Enfin, les bus sont reliés à une mémoire vive 30 ayant une capacité suffisante pour stocker deux ou trois images complètes et qu'on peut considérer comme en trois parties A, B et C.

Le processeur morphologique 28 est constitué de deux modules 40 et 42. Le module 40 constitue dispositif de ré-écriture et a pour fonction de présenter au module 42, constituant processeur, tous les arguments dont il a besoin pour effectuer la transformation (1).

De façon à minimiser le nombre d'appels à la mémoire d'image 30, le dispositif de ré-écriture 40 comporte avantageusement une mémoire locale 41 où sont stockés tous les pixels ayant déjà servi à transformation des pixels rencontrés avant le pixel $a_{ij}$ lors du balayage et qui vont encore servir pour transformer les pixels qui suivent le pixel $a_{ij}$. Dans d'autres applications, la mémoire locale 41 est prévue pour recevoir également des pixels à la fois avant et après $a_{ij}$.

Dès qu'elle est calculée par le processeur 42, la nouvelle valeur $a_{ij}^*$ est inscrite dans la mémoire d'image 30 ainsi que dans la mémoire locale 41 du dispositif 40 afin de servir d'argument pour la transformation des pixels suivants.

Le processeur de ré-écriture 28 et sa mémoire auront une constitution qui dépend du type de trame et du graphe de voisinage adoptés. La Figure 2 montre une constitution du processeur 28 utilisable lorsque le balayage est du type video, en sens direct et en sens inverse, correspondant à une trame rectangulaire. Mais, comme cela a déjà été indiqué, une trame hexagonale est utilisable.

Dans le cas du balayage video direct, les valeurs présentées au processeur 42 doivent être :

$$a_{i-1,j-1}^* \qquad a_{i-1,j}^* \qquad a_{i-1,j+1}^* \qquad (2)$$

$$a_{i,j-1}^* \qquad a_{i,j}$$

Dans le cas de la reconstruction de grains, on présente aussi la valeur $b_{i,j}$, issue de la mémoire B, au processeur 42.

La mémoire locale 41 montrée en Figure 2 doit rendre simultanément disponibles, pour le processeur 42, le pixel sur lequel s'effectue la transformation et quatre pixels déjà transformés. Pour cela, elle comporte une mémoire vive 34, ayant une capacité correspondant à n-1 pixels. Cette mémoire est adressable en lecture et en écriture par le bus d'adresse 35. La sortie de données de la mémoire 34 attaque deux éléments de mémorisation 36 et 38 montés en cascade, ayant chacun une capacité d'un seul pixel (bascules en général). La sortie du processeur 42 est reliée à l'entrée de la mémoire 34 et à l'entrée

5

d'un élément de mémoire 44 ayant une capacité d'un seul pixel, ainsi qu'au bus d'écriture de la mémoire 30.

Par ailleurs, la mémoire 30 est également reliée, dans le cas représenté, à des éléments 46 et 48 de mémorisation dont la capacité est d'un seul pixel.

On voit que les sorties de la mémoire 34, et des éléments de mémorisation 36, 38, 44, 46 et 48 permettent de présenter simultanément au processeur 42 les valeurs de six pixels. Ces six valeurs sont appliquées sur des entrées E1, E2,... E6. La transformation à effectuer détermine la constitution du processeur 42, la répartition de pixels stockés dans les éléments de mémorisation et celle appliquée au processeur 42.

Le montage représenté permet notamment d'obtenir la fonction érosion en trame carrée et la reconstruction de grains, comme on le verra plus loin de façon plus détaillée.

On peut notamment disposer simultanément, à la sortie des divers éléments :
- pour l'élément de mémorisation 46, du pixel $a_{ij}$, en même temps qu'il y a lecture du pixel $a_{i,j+1}$ dans la partie A de la mémoire et transfert en 46,
- pour l'élément de mémorisation 48, du pixel $b_{ij}$, en même temps qu'il y a lecture du pixel $b_{i,j+1}$ dans la partie B de la mémoire.

Quant aux autres éléments, ils fournissent, lorsque $a^*_{i,j}$ est appliqué à 34 et 44 :
- pour l'élément de mémorisation 44, du pixel déjà transformé $a^*_{i,j-1}$ ;
- pour la mémoire 34, la valeur déjà transformée $a^*_{i-1,j+1}$ ;
- pour l'élément de mémorisation 36, la valeur déjà transformée $a^*_{i-1,j}$ ;
- pour l'élément de mémorisation 38, la valeur déjà transformée $a^*_{i-1,j-1}$.

Les opérations sont synchronisées par un signal d'horloge H provenant de la base de temps du système.

Lors du balayage en sens contraire, l'élément structurant associé à $a_{ij}$ subit une symétrie par rapport au point aij. Ainsi, l'élément de mémorisation du dispositif 41 qui contenait le pixel $a_{1,s}$ pendant le balayage direct contient à présent le pixel $a_{2i-1,2j-s}$.

On décrira maintenant divers dispositifs permettant chacun de réaliser une transformation particulière, parmi les plus importantes.

Fonction ERODE

La fonction ERODE est déjà connue. On pourra consulter J. SERRA, "Image analysis and mathematical morphology", Academic Press, 1982, pp. 43-45 pour la définition de l'érosion et l'article de Rosenfeld déjà mentionné pour une définition de la fonction ERODE sous le nom "distance transformation".

Il suffit ici de garder en mémoire que la fonction ERODE d'une image binaire X, conditionnellement à une image binaire Y, est une fonction numérique, qu'on désigne par $ERODE_Y(X)$ et qui est parfaitement définie par ses seuils successifs. Soit Sn le seuil de niveau n de la fonction $ERODE_Y(X)$, il est défini par la relation de récurrence :

So = X U Y

$Sn = (S_{n-1} \ominus H)$ U Y, où $\ominus$ H représente la plus petite érosion par un élément isotrope surfacique.

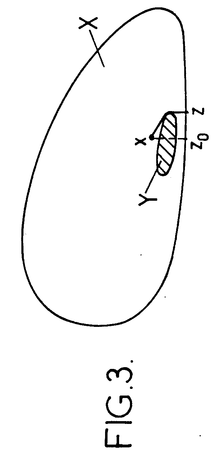

Lorsque Y n'est pas vide, $ERODE_Y(x)$ représente la longueur du plus court chemin allant de x à $X^c$ et contournant Y, réalisé dans la Figure 3 par le chemin allant de x à z.

Un cas particulier est celui où l'ensemble Y est vide. La distance géodésique se réduit alors à la distance euclidienne $xz_0$ de x (Figure 3).

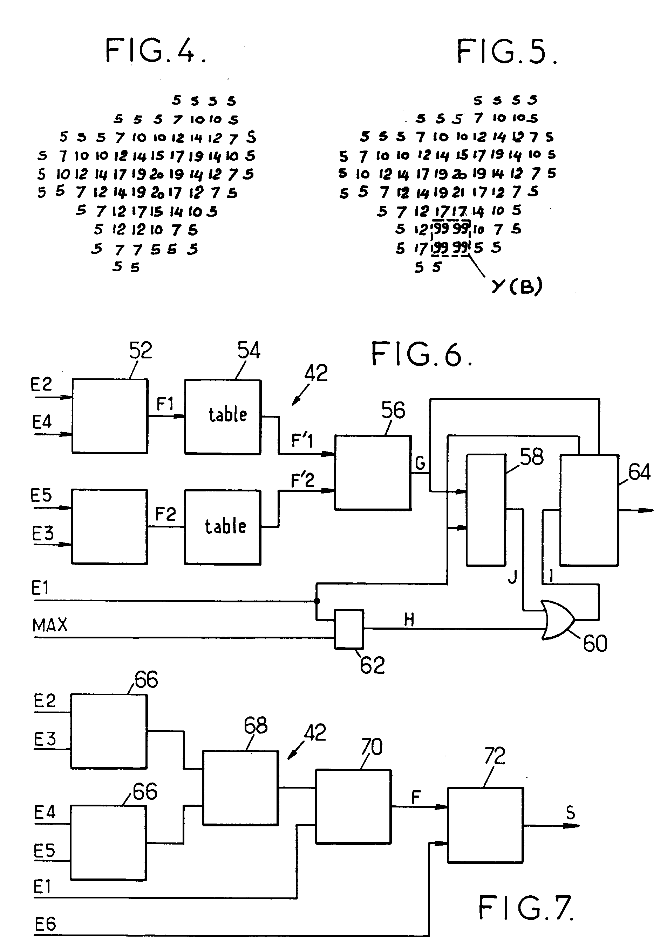

Les Figures 4 et 5 montrent, à titre d'exemple sur la trame carrée et pour le même ensemble X, la fonction ERODE euclidienne (Figure 4) et la fonction ERODE géodésique conditionnellement à un ensemble Y comportant quatre pixels suivant une disposition carrée (Figure 5).

Avant de décrire la mise en oeuvre du procédé à l'aide d'un dispositif ayant la constitution montrée en Figures 1 et 2, on détaillera le procédé de traitement dans le cas particulier d'une trame carrée, en connexité huit et avec des distances vraies entre pixels, l'adaptation à une autre trame ou à une autre connexité étant immédiate.

Dans le cas le plus général, le procédé doit permettre de déterminer la fonction ERODE géodésique d'un ensemble binaire X conditionnellement à un ensemble binaire Y. Dans un mode avantageux, mais non exclusif, de mise en oeuvre du procédé, permettant de simplifier les calculs, on effectue une initialisation consistant à coder l'image initiale pour créer une image numérique transformée de départ F telle que :

$F(x) = Max$ si $x \epsilon Y$
$F(x) = Max-1$ si $x \epsilon X \eta Y^c$

$F(x) = 0$ si $x \epsilon X^c \eta Y^c$

Max désignant la valeur maximum disponible $2^s$ et $Y^c$ étant le complément de Y.

La partie courante du processus consiste à mettre en oeuvre, de façon répétitive, un groupe de deux passes successives, la première passe étant dans le sens video direct et la seconde dans le sens video inverse.

Dans le cas euclidien, il suffit de deux passes successives pour obtenir le résultat.

Dans le cas géodésique, il faut au contraire répéter la succession jusqu'à stabilité, c'est-à-dire jusqu'à ce que deux passes supplémentaires ne modifient plus aucun point, ce qui implique un test.

Au cours de chaque passe, la configuration de voisinage est supposée être, en trame carrée :

$$a_{i-1,j-1} \qquad a_{i-1,j} \qquad a_{i-1,j+1}$$

$$a_{i,j-1} \qquad a_{i,j} \qquad a_{i,j+1}$$

$$a_{i+1,j-1} \qquad a_{i+1,j} \qquad a_{i+1,j+1}$$

Les règles de transformation de chaque point sont alors, pour le balayage video direct :
si

$$a_{i,j} = \text{Max} , a^*_{i,j} = \text{Max}$$

sinon,

$$a^*_{i,j} = \text{Min} [a_{i,j}, 5 + \text{Min}(a_{i-1,j}, a_{i,j-1}),$$
$$7 + \text{Min}(a_{i-1,j+1}, a_{i-1,j-1})]$$

Lors d'un balayage video inverse, on a par contre :
si

$$a_{i,j} = \text{Max} , a^*_{i,j} = \text{Max}$$

sinon,

$$a^*_{i,j} = \text{Min} [a_{i,j}, 5 + \text{Min}(a^*_{i,j+1}, a^*_{i+1,j})$$
$$7 + \text{Min}(a^*_{i+1,j-1}, a^*_{i+1,j+1})]$$

Dans le cas d'une trame hexagonale, la valeur de $a^*_{i,j}$, lorsque $a_{i,j}$ n'est pas égal à Max, est différente, on peut adopter :

$$a^*_{i,j} = \text{Min} [a_{i,j}, 1 + \text{Min} (d^*, e^*, g^*)]$$

ou bien

$$a^*_{i,j} = \text{Min} [a_{i,j}, 4 + \text{Min} (d^*, e^*, g^*), 7 + \text{Min} (c^*, b^*, f^*)]$$

où b, c, d, e, f, g ont la disposition suivante, lors du balayage direct,

$$. \quad\quad b \quad\quad .$$

$$c \quad\quad d \quad\quad e \quad\quad f$$

$$g \quad\quad a_{i,j} \quad .$$

la disposition étant inversée pour le balayage video inverse.

Il faut remarquer que, par rapport à l'article de Rosenfeld mentionneé plus haut, l'introduction de deux distances différentes entre deux points adjacents sur les lignes horizontales et verticales d'une part, et sur les lignes diagonales d'autre part, constitue une innovation importante, car elle permet d'obtenir une représentation des distances beaucoup plus fidèle.

Le processus peut alors être mis en oeuvre à l'aide du dispositif montré en Figures 1 et 2, le dispositif 40 présentant au processeur 42 le voisinage suivant lors du balayage video direct (E1 à E5 désignant les entrées de 42) :

$$
\begin{array}{ccc}
a^{*}_{i-1,j-1} & a^{*}_{i-1,j} & a^{*}_{i-1,j+1} \\
a^{*}_{i,j-1} & a_{ij} &
\end{array}
\quad = \quad
\begin{array}{ccc}
E_5 & E_4 & E_3 \\
E_2 & E_1 &
\end{array}
$$

et, lors du balayage video inverse :

$$
\begin{array}{ccc}
a_{ij} & a^{*}_{i,j+1} & \\
a^{*}_{i+1,j-1} & a^{*}_{i+1,j} & a^{*}_{i+1,j+1}
\end{array}
\quad = \quad
\begin{array}{ccc}
E_1 & E_2 & \\
E_3 & E_4 & E_5
\end{array}
$$

La constitution du processeur 42 peut alors être celle montrée en Figure 6, l'entrée E6 montrée en Figure 2 n'étant pas affectée.

Le dispositif 42 de la Figure 6 comporte deux branches d'entrée. La première branche comporte un opérateur 52, constitué par un comparateur contrôlant un multiplexeur à deux voies d'entrée, fournissant sur sa sortie le minimum des deux valeurs appliquées sur son entrée. Ces deux entrées sont celles identifiées par $E_2$ et E4 sur la Figure 2. La sortie F1 de l'opérateur 52 est envoyée dans une table de correspondance 54 qui transforme F1 en F'1 défini par :
si

F1 < Max-5 F'1 = 5 + F1

sinon,

F'1 = Max

La seconde branche a la même constitution et effectue les mêmes opérations sur les entrées E3 et E5 pour fournir une valeur F'2, si ce n'est que la table de correspondance de cette branche transforme F2 en F'2 défini par :
si

F2 < Max-7 , F'2 = 7 + F2

sinon,

F'2 = Max.

Les valeurs F'1 et F'2 sont appliquées sur les deux entrées d'un opérateur 56 qui fournit sur sa sortie le minimum G de F'1 et F'2 et l'applique sur l'une des entrées d'un comparateur 58 et d'un multiplexeur 64.

La seconde entrée du comparateur 58 constitue l'entrée E1 du dispositif de ré-écriture 42. Ce comparateur a une constitution telle qu'il fournit, sur sa sortie, un signal J égal à :

1 si E1 est plus faible que G

0 dans le cas contraire.

Le signal J est appliqué sur l'une des entrées d'une porte OU 60. L'autre entrée de la porte 60 est reliée à la sortie d'un comparateur d'égalité 62. Le signal de sortie H du comparateur 62 est égal à 1 si E1 = Max. Dans le cas contraire, H = 0. On voit en conséquence que la sortie I de la porte 60 est égale à J si H vaut 0, donc si E1 n'est pas égal à Max.

Le signal de sortie de la porte 60 est appliqué à l'entrée de commande du multiplexeur 64 dont la seconde entrée de données reçoit le signal E1. La porte 60 détermine donc celle des entrées du multiplexeur 64 qui est reliée à sa sortie, qui constitue la sortie S du processeur 42 relié au bus d'écriture en vue de l'écriture en partie B de la mémoire 30, dans la mémoire vive 34 et dans le registre 44.

## La fonction ERODE par traitement en ré-écriture selon des lignes d'orientation quelconque

Il peut être avantageux de concevoir une architecture d'analyse d'image à l'aide de circuits intégrés du commerce ayant, dans le même boîtier, une partie processeur et une partie mémoire. Il est alors intéressant de décomposer le traitement d'une image en tâches indépendantes à effectuer en parallèle, chaque tâche indépendante se voyant dédier un processeur. La fonction ERODE se prête bien à une telle décomposition en transformations séquentielles linéaires, c'est-à-dire qui n'utilisent et ne modifient que l'information contenue dans une ligne d'orientation donnée de l'image. Le traitement comprendra alors plusieurs passes, chacune modifiant le résultat de la passe précédente et travaillant dans une direction différente. Pour une direction donnée, le traitement de chaque ligne de l'image est indépendant du traitement de toutes les autres lignes. Ainsi, le traitement de chaque ligne peut-il être confié à un processeur différent, tous ces processeurs travaillant en parallèle.

Un autre avantage de cette façon de faire est de permettre de générer des éléments structurants beaucoup plus isotropes, en introduisant des directions non usuelles (telles qui $\pi/2$ en maille hexagonale). La prise en compte de ces directions en balayage video conventionnel serait très coûteuse car elle exigerait l'emploi d'éléments structurants très grands.

On va maintenant montrer comment peut s'effectuer un traitement ERODE en ré-écriture ligne par ligne, en se limitant pour simplifier au cas euclidien en trame carrée.

L'image de départ sera codée comme suit (les notations étant celles déjà utilisées) :

F(x) = Max si x $\epsilon$ x
F(x) = 0 sinon

On traite alors l'une après l'autre chacune des directions :
0, $\pi/4$, $\pi/2$, $3\pi/4$, $\pi$ , $5\pi/4$, $3\pi/2$, $7\pi/4$
et, pour chaque direction, on exécute l'algorithme suivant :

$$a^*_i = \mathrm{Min}(a^*_{i-1} + k_j, a_i)$$

$k_j$ représentant la distance entre deux pixels consécutifs pour la direction d'exploration j, c'est-à-dire par exemple k = 5 pour les directions 0, $\pi/2$, $\pi$, $3\pi/2$ ; k = 7 pour les directions $\pi/4$, $3\pi/4$, $5\pi/4$, $7\pi/4$ en trame carrée.

## Reconstruction de grains avec ré-écriture

La reconstruction de grains constitue une transformation en elle-même connue, dont on pourra notamment trouver une description dans le livre de Serra déjà cité, pp. 401-403.

Le résultat recherché par l'invention est d'effectuer une reconstruction de grains numérique d'une image numérique A à partir d'une image numérique B.

On répète pour cela, dans l'algorithme classique, jusqu'à obtention de la stabilité, la mise en oeuvre de l'algorithme :

A' = Min [A ⊕ H, B]

A' étant substitué à A pour l'opération suivante et H étant l'hexagone (ou le carré) élémentaire dans la trame.

L'algorithme en réécriture ci-dessous permet d'atteindre le même résultat avec un nombre de passes bien plus faible qu'avec l'algorithme classique.

Le dispositif de mise en oeuvre pourra encore être celui montré en Figures 1 et 2, mais avec un processeur 42 de constitution différente de celle montrée en Figure 6.

Dans le cas particulier d'une trame carrée en connexité huit, le processeur 42 peut avoir la constitution montrée en Figure 7. Le voisinage étant celui déjà défini en (2) ci-dessus, il faut effectuer la transformation :

$$a^*_{ij} = Min[b_{ij}, Max(a_{ij}, a^*_{i,j-1}, a^*_{i-1,j+1}, a^*_{i-1,j}, a^*_{i-1,j-1})] \ldots\ldots\ldots\ldots\ldots(3)$$

en balayage video direct.

En balayage video inverse, le voisinage est inversé et la transformation à effectuer sur chaque pixel de l'image numérique A s'effectue suivant l'algorithme :

$$a^*_{ij} = Min[b_{ij}, Max(a_{ij}, a^*_{i,j+1}, a^*_{i+1,j+1}, a^*_{i+1,j}, a^*_{i+1,j-1})] \ldots\ldots\ldots\ldots\ldots (3bis)$$

Pour cela, le processeur 42 doit recevoir, en balayage video direct, les entrées
$b_{ij}$ sur E6
(b désignant un pixel en partie B de la mémoire contenant l'image B)

$a^*_{i-1,j-1}$ sur E5
$a^*_{i-1,j}$ sur E4
$a^*_{i-1,j+1}$ sur E3
$a^*_{i,j-1}$ sur E2
$a_{ij}$ sur E1

La présentation en balayage video inverse se déduit de la précédente par symétrie de l'élément structurant autour de $a_{ij}$.

Le processeur 42 comprend deux opérateurs d'entrée 66 dont chacun est constitué par un comparateur suivi d'un multiplexeur. Le premier opérateur 66 par exemple reçoit les entrées E2 et E3 et fournit sur sa sortie un signal numérique représentatif de la plus grande des deux valeurs E2 et E3. Le second opérateur 66 a la même constitution mais reçoit les entrées E4 et E5. Les sorties des deux opérateurs 66 sont reliées aux deux entrées d'un second opérateur ayant la même constitution que les premiers, fournissant donc sur sa sortie un signal numérique représentatif du maximum de E2,..., E5. Un autre opérateur 70, identique au précédent, comporte une entrée reliée à la sortie de l'opérateur 68 et une seconde entrée qui reçoit E1. En conséquence, la sortie F de l'opérateur 70 représente le maximum de toutes les valeurs E1 à E5. Un dernier opérateur 72 reçoit la sortie de l'opérateur 70 et le signal E6, représentatif de $b_{ij}$ quel que soit le sens de balayage. La sortie S de ce dernier comparateur, constituée par Min (F, E6) est écrite dans la mémoire d'image par le bus d'écriture et est réinjectée dans les mémoires 44 et 34 pour servir au traitement des pixels suivants.

Squelettisation

La squelettisation d'un ensemble de pixels représentés par des nombres binaires ou des fonctions numériques constitue l'une des transformations les plus utiles en analyse d'image. Elle permet de détecter l'axe médian d'un ensemble de pixels codés en binaire ou les "lignes de crête" d'un ensemble de pixels que l'on peut considérer comme représentant une fonction numérique. On trouvera une description de la squelettisation et des dispositifs classiquement utilisés à ce jour dans l'ouvrage de Serra mentionné plus haut, en pages 373 à 401 et 450 à 456.

Les méthodes de squelettisation antérieures partent toutes du même principe : on enlève, par passes successives, des points du contour de chaque particule de l'image dont on recherche le squelette, ce qui correspond à des amincissements successifs de la particule. Des critères de voisinage permettent d'éviter de faire disparaitre une particule, constituée par un ensemble de pixels, ou un trou ou de scinder la particule ou le trou. On fait de même, pour un ensemble représentable par une fonction numérique, en veillant à ce que le même critère soit vérifié pour tous les seuils.

Toutes les méthodes connues exigent un nombre de passes qui augmente avec la dimension des plus grandes particules à squelettiser dans l'image.

Le procédé et le dispositif suivant l'invention qui vont maintenant être décrits permettent de simplifier considérablement l'opération : ils permettent de déterminer le squelette d'une particule en une séquence qui comprend :

- une préparation rapide de l'image,
- une squelettisation en trois passes (effectuées par exemple la première en balayage video direct, la seconde en balayage video inverse et la troisième en balayage video direct).

On décrira maintenant tout d'abord la séquence générale de squelettisation puis, de façon détaillée, le cas de la construction du squelette euclidien d'un ensemble de pixels binaires.

Procédé général

Le procédé peut être regardé comme comportant au moins trois étapes (a) on génère un relief sans plateau, (b) on code éventuellement le relief du voisinage de chaque pixel de l'ensemble à squelettiser suivant un algorithme de codage prédéterminé, (c) on marque les points crête sur le relief éventuellement codé et (d) on génère, sur ce même relief, l'amont des points crêtes par un procédé à ré-écriture tel que défini plus haut.

A titre d'exemple, le procédé général sera décrit en supposant d'abord les pixels répartis suivant une trame non plus carrée comme dans les cas précédents, mais hexagonale. Le procédé sur trame carrée se fait de manière très semblable. Le passage d'une répartition en maille carrée à une maille hexagonale peut être effectué par transformation parallèle qui conduit à réaliser les voisinages suivants :

- sur une ligne paire:

$$a_{i-1,j} \qquad a_{i-1,j+1}$$

$$a_{i,j-1} \qquad a_{ij} \qquad a_{ij+1}$$

$$a_{i+1,j} \qquad a_{i+1,j+1}$$

- sur une ligne impaire :

$$a_{i-1,j-1} \qquad a_{i-1,j}$$

$$a_{ij-1} \qquad a_{ij} \qquad a_{i,j+1}$$

$$a_{j+1,j-1} \qquad a_{i+1,j}$$

et, pour avoir une présentation indépendante de la parité, on désignera également le voisinage par

$$a \qquad b$$
$$c \qquad d \qquad e$$
$$f \qquad g$$

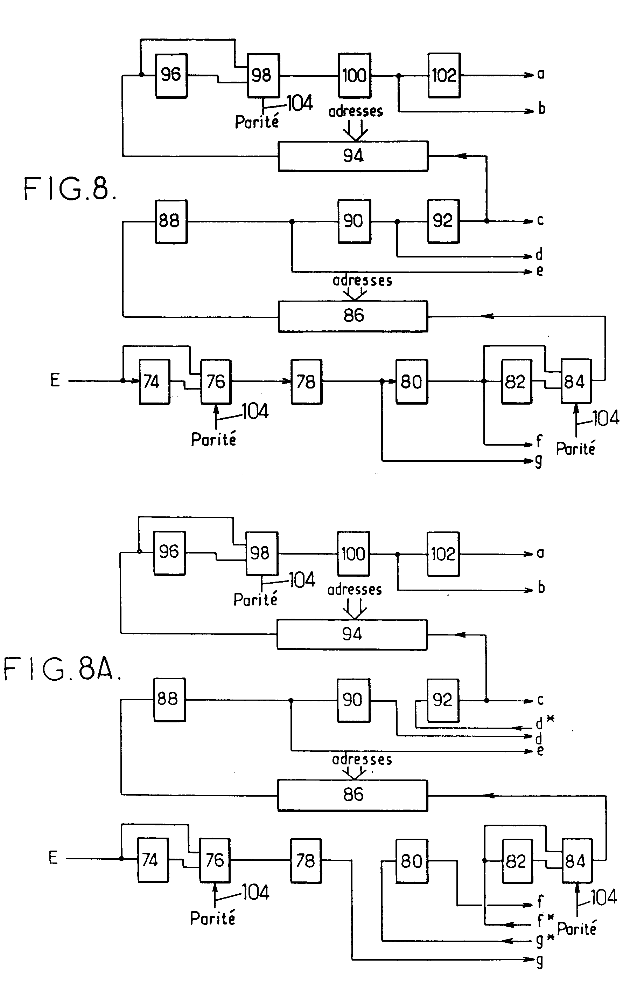

Cette transformation peut être réalisée en utilisant le dispositif montré en Figure 8, qui comporte deux voies fonctionnant en alternance.

Le dispositif montré en Figure 8 reçoit de la mémoire centrale 30, sur l'entrée E, la valeur de chaque pixel et il la stocke jusqu' à ce qu'elle ne soit plus utilisée par aucun élément structurant. Il décale ces valeurs à l'intérieur de la mémoire locale à chaque coup d'horloge de manière à présenter au processeur 42 (Figure 1) le voisinage correct (a, b, c, d, e, f, g) du point central et quelle que soit la parité de la ligne traitée. On constate en effet sur les deux voisinages de $a_{ij}$ illustrés plus haut que, lorsque la ligne i est paire, les voisins a et f (respectivement b et g) ont le rang j (respectivement j + 1) alors que, pour une ligne impaire, ils ont le rang j-1 (respectivement j). Pour opérer un tel décalage une ligne sur deux, le dispositif comporte trois montages identiques 74-76, 82-84, 96-98.

A titre d'exemple, la constitution du montage 74-76 sera détaillée. Il reçoit de la mémoire 30, la valeur $a_{i+1,j+2}$, au moment où $a_{i,j}$ est point central de l'élément structurant. Cette entrée est appliquée simultanément sur l'entrée d'un registre 74 et sur l'une des entrées d'un multiplexeur 76. La sortie du registre 74 constitue l'autre entrée du multiplexeur. Le multiplexeur lui-même est commandé par un signal de parité sur son entrée 104. Dans une ligne paire, le multiplexeur présente sur sa sortie l'entrée appliquée sur E, soit $a_{i+1,j+2}$ alors que, dans une ligne impaire, il prend le contenu du registre 74, soit $a_{i+1,j+1}$. La sortie du multiplexeur 76 alimente deux registres 78 et 80 montés en cascade, permettant chacun de retarder d'un temps d'horloge la valeur du pixel qu'il reçoit en entrée. Ainsi, dans une ligne paire, les registres 78 et 80 présenteront-ils sur leur sortie les valeurs des pixels $a_{i+1,j+1}$ et $a_{i+1,j}$ et, sur une ligne impaire, les valeurs des pixels $a_{i+1,j}$ et $a_{i+1,j-1}$. On constate qu'on a bien les valeurs correctes des points f et g, voisins du point central d, sur ces sorties.

Le montage doit présenter, à l'entrée d'une mémoire vive 86, la valeur du pixel $a_{i+1,j-1}$ quelle que soit la parité de la ligne. Pour cela, le montage 82-84 fonctionne en opposition avec le montage 74-76 : lorsque le multiplexeur 76 choisit l'entrée du registre 74, le multiplexeur 84 choisit la sortie du registre 82. Ainsi leurs effets s'annulent.

La mémoire vive opère comme un registre à décalage introduisant un retard de n-3 pixels.

La sortie de la mémoire vive 86, soit $a_{i,j-2}$, est injectée dans une cascade de trois registres 88, 90 et 92 permettant de retarder chacun d'un temps d'horloge la valeur du pixel qu'il reçoit en entrée. Les sorties de ces trois registres constituent les points du voisinage $e = a_{i,j+1}$, $d = a_{ij}$, $c = a_{i,j-1}$.

La sortie du registre 92, soit $a_{i,j-1}$, est également reliée à l'entrée d'une mémoire 94 identique à la mémoire 86.

La sortie de la mémoire vive 94, soit $a_{i-1,j+2}$, constitue l'entrée du dernier des trois montages registre-multiplexeur 96-98. L'ensemble du dispositif 96-98-100-102 est identique au dispositif 74-76-78-80 et fonctionne de manière synchrone avec ce dernier. Les sorties des registres 100 et 102 constituent ainsi les derniers points du voisinage b et a, valant respectivement $a_{i-1,j}$ et $a_{i-1,j-1}$ lorsque la ligne traitée est impaire.

Ce dispositif est légèrement plus compliqué que celui qu'on utilise habituellement pour le stockage local des transformations hexagonales parallèles. Mais, tel qu'il a été présenté, il a l'avantage de pouvoir se transformer aisément en un dispositif à ré-écriture, par une modification simple des connexions, comme le montre la Figure 8A. Dans le dispositif de la Figure 8, les pixels g, f, d, lus respectivement à la sortie des registres 78, 80 et 90, sont réinjectés dans les registres suivants 80, 82 et 92. Dans le dispositif à réécriture de la Figure 8A au contraire, on injecte à l'entrée des registres 80, 82 et 92, les valeurs transformées g*, f* et d* qui auront été calculées par le processeur 42.

On peut d'ores et déjà remarquer que l'on peut passer du dispositif montré en Figure 8 à un dispositif à ré-écriture, montré en Figure 8A, par une modification simple des connexions.

Après avoir ainsi décrit le passage de la trame carrée à la trame hexagonale, on va décrire la séquence générale du procédé d'obtention de squelette, avant de s'attacher en détail au cas particulier de divers squelettes euclidiens binaires.

La première étape consiste à effectuer une préparation de l'image par <u>génération d'un relief</u>.

Dans le Cas d'une image binaire, On crée tout d'abord, par le procédé décrit plus haut sous la rubrique "Fonction érosion", la fonction ERODE de l'ensemble binaire X à squelettiser conditionnellement à l'ensemble binaire Y éventuel (si on est dans le cadre géodésique). Cette fonction ERODE permet de coder le relief au voisinage du pixel a de l'ensemble X à transformer.

Dans le cas du voisinage suivant :

$$a_4 \qquad a_3$$
$$a_5 \qquad a \qquad a_2$$
$$a_6 \qquad a_7$$

Il s'agit là uniquement d'un codage local : le pixel a, ainsi que tous ses voisins dont l'altitude est égale à celle de a dans la fonction ERODE seront codés à 1. Ceux dont l'altitude est supérieure à celle de a sont codés à 2. Ceux dont l'altitude est inférieure sont codés à 0.

Une fois le codage du relief effectué au voisinage de chaque pixel, la squelettisation proprement dite va s'effectuer en deux étapes sur le relief généré dans l'image, d'abord le marquage des points crêtes, puis le marquage de l'amont des points crêtes dans la fonction ERODE ou le graphe d'écoulement (cet amont appartenant lui aussi au squelette).

Marquage des points crêtes

On utilise, pour cette opération, une mémoire binaire contenant initialement des 1 et en mettant à zéro tous les pixels qui appartiennent à une crête de l'image, et cela en une seule passe à travers l'image.

On obtient d'abord une ébauche de squelette, qui sera généralement en plusieurs fragments. Mais tout l'amont de ces fragments dans la fonction ERODE ou dans le graphe d'écoulement appartient également au squelette. Cet "amont" se définit pratiquement selon les mêmes principes dans tous les cas (binaire euclidien, binaire géodésique ou numérique).

On peut, à partir des points crêtes donnant une ébauche du squelette, construire l'amont en trois passes par un processus de ré-écriture pouvant mettre en oeuvre le dispositif montré en Figure 8, en prenant en compte un voisinage de douze points.

Remontée vers l'amont

A l'issue de l'opération précédente, on dispose uniquement de tronçons du squelette. Pour relier ces tronçons et former le squelette complet, il est nécessaire de remonter vers l'amont. Cette opération se fait en trois passes :
- la première dans le sens video direct pour les directions - $\pi/6$, - $\pi/3$, - $\pi/2$, - 2 $\pi$3, - 5 $\pi/6$
- la seconde dans le sens video inverse pour les directions $\pi/6$, $\pi/3$, $\pi/2$, 2 $\pi/3$, 5 $\pi/6$, $\pi$
- la dernière dans le sens video direct pour la direction O.

**Revendications**

1. Dispositif de transformation d'image définie par des pixels présentant chacun une caractéristique, telle qu'une brillance, définie par une valeur numérique, les pixels étant emmagasinés suivant une matrice dans une mémoire d'image, caractérisé en ce qu'il comprend :
   - un organe (10,12) d'acquisition d'image sous forme de pixels représentés chacun par un nombre, relié à un bus d'écriture (14),
   - une mémoire vive d'image (30) comprenant plusieurs parties (A,B,C) ayant chacune une capacité suffisante pour stocker une image complète, dont l'entrée est reliée au bus d'écriture (14), permettant d'appliquer simultanément sur deux bus de lecture (20,22) les représentations numériques de deux pixels correspondants de deux images successives stockées dans la mémoire d'image,
   - une unité de calcul (24) ayant des entrées reliées aux deux bus de lecture, capable d'effectuer les opérations d'addition, de soustraction, de recherche de minimum et de maximum entre pixels présents simultanément sur les bus de lecture (20,22),

- un processeur morphologique (26) de transformation sur un voisinage comportant une sortie reliée au bus d'écriture (14) et une entrée reliée à la sortie de l'unité de calcul, permettant d'effectuer des transformations de voisinage, et

- un processeur morphologique de traitement d'image avec ré-écriture (28) ayant des entrées reliées aux bus de lecture (20,22) et agencé pour fournir sur le bus d'écriture un pixel reconstruit, pour ré-écriture dans la mémoire d'image (30), ledit processeur (28) ayant une mémoire locale (41) de capacité suffisante pour stocker et pour délivrer simultanément des pixels de voisinage déjà reconstruits avant un pixel courant ($a_{ij}$) lors du balayage de l'image, et un module processeur (42) recevant de la mémoire locale (41) lesdits pixels de voisinage nécessaires à la transformation morphologique, la sortie du module processeur étant reliée à l'entrée de la mémoire locale (41) et à la mémoire d'image.

2. Dispositif selon la revendication 1, caractérisé en ce que ledit processeur morphologique a une mémoire locale qui comprend une première branche ayant une mémoire vive adressable se comportant comme un registre à décalage (34), ayant une capacité au moins égale au nombre de pixels d'une ligne de balayage de l'image moins un, placé en cascade avec des éléments de mémorisation temporaire (36,38) ayant chacun une capacité d'un seul pixel et qui comprend une seconde branche ayant au moins un élément de mémorisation temporaire (44) d'un pixel, les entrées des deux branches étant connectées de façon à recevoir le même pixel courant à la sortie du module processeur (41).

**Claims**

1. Device for the transformation of an image defined by pixels each presenting a characteristic, such as brightness, defined by a digital value, the pixels being stored as a matrix in an image memory, characterized in that it comprises:
   - a unit (10, 12) for acquisition of an image as pixels each represented by a number, connected to a write bus (14),
   - an image random access memory (30) (RAM) comprising a plurality of parts (A, B, C) each having a sufficient capacity to store one complete image, whose input is connected to the write bus (14), allowing simultaneous application, to two read busses (20, 22), of the digital representations of two mutually corresponding pixels of two successive images stored in the image memory,
   - a computing unit (24) having inputs connected to the two read busses, apt to carry out additions, subtractions, search for a minimum, search for a maximum among pixels which are simultaneously present on the read busses (20, 22),
   - a morphological processor (26) for carrying out transformations on a neighborhood, having an output connected to the write bus (14) and an input connected to the output of the computing unit, apt to carry out neighborhood transformations, and
   - a morphological processor for image rewrite processing (28) having inputs connected to the read busses (20, 22) and arranged for delivering, to the write bus, a reconstructed pixel for rewriting into the image memory (30), said processor (28) having a local memory (41) of sufficient capacity to store and simultaneously deliver neighboring pixels already reconstructed before a current pixel ($a_{ij}$) during image scanning and a processing module (42) receiving said neighboring pixels from the local memory (41), said neighboring pixels being necessary to the morphological transformation, the output of the processing module being connected to the input of the local memory (41) and to the image memory.

2. Device according to claim 1, characterized in that said morphological processor has a local memory which comprises a first branch having an addressable random access memory operating as a shift register (34), the capacity of which is at least equal to the number of pixels in a scanning line of the image less one, cascaded with temporary storage elements (36, 38) each having a capacity of one pixel and which comprises a second branch having at least one element for temporary storage of one pixel, the inputs of the two branches being connected for receiving the same current pixel at the output of the processing module (41).

**Patentansprüche**

1. Einrichtung zur Transformation eines Bildes, das durch Pixel definiert ist, die jeweils ein Merkmal, wie beispielsweise die Helligkeit, aufweisen, das durch einen numerischen Wert definiert ist, wobei die Pixel entsprechend einer Matrix in einem Bildspeicher gespeichert sind, dadurch **gekennzeichnet**, daß sie aufweist:

eine mit einem Schreibbus (14) verbundene Einheit (10, 12) zum Erfassen eines Bildes in Form von Pixeln, die jeweils durch eine Zahl dargestellt sind,

einen Bild Random speicher (30)(RAM) der mehrere Teile (A, B, C) aufweist, die jeweils eine ausreichende Kapazität aufweisen, um ein komplettes Bild zu speichern, und dessen Eingang mit dem Schreibbus (14) verbunden ist, um gleichzeitig an zwei Lesebusse (20, 22), die numerischen Darstellungen von zwei Pixeln anzulegen, die zwei nacheinander im Bildspeicher gespeicherten Bildern entsprechen,

eine Recheneinheit (24), deren Eingänge mit den zwei Lesebussen verbunden sind, um die Operationen, wie Addition, Subtraktion, Minimum- und Maximumbestimmung zwischen gleichzeitig auf den Lesebussen (20, 22) vorhandenen Pixeln durchzuführen,

einen morphologischen Transformationsprozessor (26) für die Umgebung, der einen Ausgang, welcher mit dem Schreibbus (14) verbunden ist, und einen Eingang aufweist, der mit dem Ausgang der Recheneinheit verbunden ist, um Umgebungstransformationen durchzuführen, und

einen morphologischen Prozessor (28) für die Bildverarbeitung mit Wiedereinschreiben, dessen Eingänge mit den Lesebussen (20, 22) verbunden sind, und der vorgesehen ist, um ein wiederaufbereitetes Pixel zum Wiedereinschreiben in den Bildspeicher (30) auf dem Schreibbus zu liefern, wobei der Prozessor (28) einen örtlichen Speicher (41) ausreichender Kapazität, um bei der Abtastung eines Bildes bereits wiederaufbereitete Umgebungspixel vor einem laufenden Pixel ($a_{ij}$) zu speichern und gleichzeitig abzugeben, und ein Prozessormodul (42) aufweist, das aus dem örtlichen Speicher (41) die Umgebungspixel aufnimmt, die zur morphologischen Transformation erforderlich sind, wobei der Ausgang des Prozessormoduls mit dem Eingang des örtlichen Speichers (41) und dem Bildspeicher verbunden ist.

2. Einrichtung nach Anspruch 1, dadurch **gekennzeichnet**, daß der morphologische Prozessor einen örtlichen Speicher aufweist, der einen ersten Zweig mit einem adressierbaren Random speicher aufweist, der wie ein Schieberegister (34) funktioniert, eine Kapazität hat, die mindestens gleich der Anzahl Pixel einer Abtastzeile des Bildes minus eins ist, und der in Reihe mit Zwischenspeicherungselementen (36, 38) angeordnet ist, die jeweils die Kapazität eines einzigen Pixels haben, und der einen zweiten Zweig mit mindestens einem Zwischenspeicherungselement (44) für ein Pixel aufweist, wobei die Eingänge der zwei Zweige so geschaltet sind, daß sie das gleiche laufende Pixel am Ausgang des Prozessormoduls (41) aufnehmen.

EP 0 211 770 B1

FIG.1.

FIG.2.

10 12 14 16 18 24 26 32 28 40 42 41 30 A,B,C 20 22

RAM 34 35 36 38 ADRESSES H 44 41 46 $a_{i,j+1}$ 48 $b_{i,j+1}$ n n n $E_1$ $E_2$ $E_3$ $E_4$ $E_5$ $E_6$ MAX/min 42 S 30 n

FIG.3.

# FIG.4.

```
            5 5 5 5
        5 5 5 7 10 10 5
    5 5 5 7 10 10 12 14 12 7 5
  5 7 10 10 12 14 15 17 19 14 10 5
  5 10 12 14 17 19 20 19 14 12 7 5
  5 5 7 12 14 19 20 17 12 7 5
    5 7 12 17 15 14 10 5
      5 12 12 10 7 5
        5 7 7 5 5 5
          5 5
```

# FIG.5.

```
            5 5 5 5
        5 5 5 7 10 10 5
    5 5 5 7 10 10 12 14 12 7 5
  5 7 10 10 12 14 15 17 19 14 10 5
  5 10 12 14 17 19 20 19 14 12 7 5
  5 5 7 12 14 19 21 17 12 7 5
    5 7 12 17 17 14 10 5
      5 12 99 99 10 7 5
        5 17 99 99 5 5
          5 5
```

Y(B)

# FIG.6.

# FIG.7.

FIG.8.

FIG.8A.